# EUROPEAN PATENT APPLICATION

(11) **EP 4 746 234 A1**
(43) Date of publication of application: **20.05.2026**
(21) Application number: 24946778.8
(22) Date of filing: 15.07.2024
(51) Int. Cl.: H02J 3/38, H02J 3/28, H02J 3/32

(54) **DEVICE CONTROL METHOD, INVERTER AND COMPUTER-READABLE STORAGE MEDIUM**

(30) Priority: 09.07.2024 CN 202410913426
(71) Applicant: Suzhou Qiancheng New Energy Technology Co., Ltd., Suzhou, Jiangsu 215101 (CN)
(72) Inventor: DING, Jiajie, Suzhou, Jiangsu 215101 (CN); LI, Yeming, Suzhou, Jiangsu 215101 (CN); YANG, Sen, Suzhou, Jiangsu 215101 (CN); GU, Yueming, Suzhou, Jiangsu 215101 (CN); TIAN, Kang, Suzhou, Jiangsu 215101 (CN); LIU, Baodong, Suzhou, Jiangsu 215101 (CN); LV, Hongchang, Suzhou, Jiangsu 215101 (CN); REN, Taoyi, Suzhou, Jiangsu 215101 (CN); XIAO, Liujie, Suzhou, Jiangsu 215101 (CN)
(74) Representative: Bayramoglu et al.
(86) International application number: PCT/CN2024/105443
(87) International publication number: WO 2026/011471

(57) **Abstract**

The present application relates to the field of power technologies, and provides a device control method, an inverter, and a computer-readable storage medium, which can improve consistency of SOCs of power storage devices in a composite grid, so as to improve an electric energy output capability of the composite grid. The method is applied to an inverter of a primary sub-grid in a composite grid, the composite grid further includes a plurality of secondary sub-grids, each sub-grid further includes a power storage device and a power generation device, the composite grid is configured to supply power to a load, and the method includes: obtaining a current supply power of the composite grid for the load, a first load power of the load, and first information of each of a plurality of sub-grids in the composite grid, where the plurality of sub-grids include the plurality of secondary sub-grids and the primary sub-grid, the first information includes a state of the power storage device, a current state of charge (SOC) of the power storage device, and a generation power of the power generation device, and the state includes a charging state or an idle state; and controlling a plurality of inverters based on the current supply power, the first load power, and a plurality of pieces of first information to make SOCs of a plurality of power storage devices the same.

## Description

### TECHNICAL FIELD

The present application relates to the field of power technologies, and in particular, to a device control method, an inverter, and a computer-readable storage medium.

### BACKGROUND

A composite grid includes a plurality of sub-grids, and each sub-grid includes an inverter, a power storage device, and a power generation device. The composite grid can supply power to a load.

To ensure stability of the composite grid, a state of charge (SOC) of the power storage device in each sub-grid needs to be kept consistent to improve an electric energy output capability of the composite grid.

### SUMMARY

### Technical Problems

One objective of embodiments of the present application is to provide a device control method, an inverter, and a computer-readable storage medium.

### Technical Solutions

The following technical solutions are used in the present application.

According to a first aspect, a device control method is provided. The method is applied to an inverter of a primary sub-grid in a composite grid, the composite grid further includes a plurality of secondary sub-grids, each sub-grid further includes a power storage device and a power generation device, the composite grid is configured to supply power to a load, and the method includes: obtaining a current supply power of the composite grid for the load, a first load power of the load, and first information of each of a plurality of sub-grids in the composite grid, where the plurality of sub-grids include the plurality of secondary sub-grids and the primary sub-grid, the first information includes a state of the power storage device, an SOC of the power storage device, and a generation power of the power generation device, and the state includes a charging state or an idle state; and controlling a plurality of inverters based on the current supply power, the first load power, and a plurality of pieces of first information to make SOCs of a plurality of power storage devices the same.

According to a second aspect, an inverter is provided to implement the device control method according to the first aspect. The inverter is included in a primary sub-grid in a composite grid, the composite grid further includes a plurality of secondary sub-grids, each sub-grid further includes a power storage device and a power generation device, the composite grid is configured to supply power to a load, and the inverter includes an obtaining module and a processing module, where the obtaining module is configured to obtain a current supply power of the composite grid for the load, a first load power of the load, and first information of each of a plurality of sub-grids in the composite grid, where the plurality of sub-grids include the plurality of secondary sub-grids and the primary sub-grid, the first information includes a state of the power storage device, an SOC of the power storage device, and a generation power of the power generation device, and the state includes a charging state or an idle state; and the processing module is configured to control a plurality of inverters based on the current supply power, the first load power, and a plurality of pieces of first information to make SOCs of a plurality of power storage devices the same.

According to a third aspect, an inverter is provided. The inverter includes at least one processor and a memory for storing instructions executable by a processor, where the processor is configured to execute the instructions, so as to implement the method according to the first aspect and any one of possible implementations of the first aspect.

According to a fourth aspect, a computer-readable storage medium is provided. When instructions in the computer-readable storage medium are executed by a processor of an inverter, the inverter is enabled to perform the method according to the first aspect and any one of possible implementations of the first aspect.

According to a fifth aspect, a computer program product including instructions is provided. When the computer program product runs on a computer, the computer is enabled to perform the method according to the first aspect and any one of possible implementations of the first aspect.

According to a sixth aspect, a chip system is provided. The chip system includes a processor and an interface circuit, where the interface circuit is configured to receive a computer program or instructions, and transmit the computer program or the instructions to the processor; and the processor is configured to execute the computer program or the instructions, to enable the chip system to perform the method according to the first aspect and any one of possible implementations of the first aspect.

### Beneficial Effects

The method provided in the embodiments of the present application has the following beneficial effects. A current supply power of the composite grid for the load, a first load power of the load, and first information of each of a plurality of sub-grids in the composite grid are obtained. The plurality of sub-grids include the plurality of secondary sub-grids and the primary sub-grid, the first information includes a state of the power storage device, an SOC of the power storage device, and a generation power of the power generation device, and the state includes a charging state or an idle state. Then, a plurality of inverters can be controlled based on the current supply power, the first load power, and a plurality of pieces of first information to make SOCs of a plurality of power storage devices the same, thereby improving consistency of the SOCs of the power storage devices in the composite grid, so as to improve an electric energy output capability of the composite grid.

### BRIEF DESCRIPTION OF THE DRAWINGS

FIG. 1 is a schematic diagram of an architecture of a device control system according to the present application;
FIG. 2 is a schematic flowchart of a device control method according to the present application;
FIG. 3 is a schematic flowchart of another device control method according to the present application;
FIG. 4 is a schematic flowchart of another device control method according to the present application;
FIG. 5 is a schematic diagram of a structure of an inverter according to the present application; and
FIG. 6 is a schematic diagram of a structure of another inverter according to the present application.

### IMPLEMENTATIONS OF THE PRESENT INVENTION

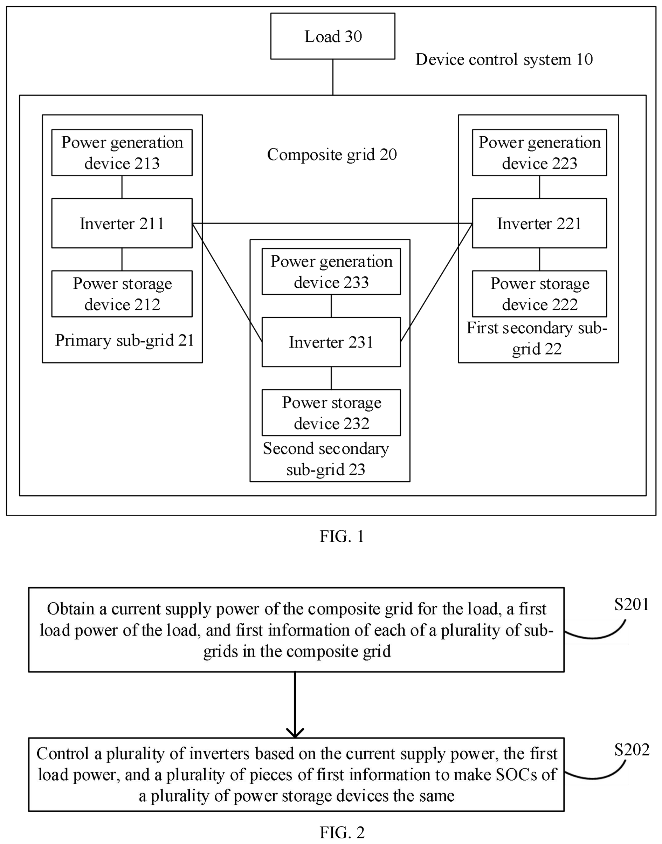

FIG. 1 is a schematic diagram of an architecture of a device control system according to the present application. As shown in FIG. 1, a device control system 10 includes a composite grid 20 and a load 30. The composite grid 20 is connected to the load 30, and the composite grid 20 supplies power to the load 30.

The composite grid 20 includes a primary sub-grid 21, a first secondary sub-grid 22, and a second secondary sub-grid 23.

The primary sub-grid 21 includes an inverter 211, a power storage device 212, and a power generation device 213. The inverter 211 is respectively connected to the power storage device 212 and the power generation device 213.

The first secondary sub-grid 22 includes an inverter 221, a power storage device 222, and a power generation device 223. The inverter 221 is respectively connected to the power storage device 222 and the power generation device 223.

The second secondary sub-grid 23 includes an inverter 231, a power storage device 232, and a power generation device 233. The inverter 231 is respectively connected to the power storage device 232 and the power generation device 233.

The inverter 211 is respectively connected to the inverter 221 and the inverter 231, and the inverter 221 is further connected to the inverter 231.

In actual applications, the solution provided in this embodiment of the present application may be applied to the inverter 211 of the primary sub-grid 21, or may be applied to an apparatus included in the inverter 211 of the primary sub-grid 21.

With reference to the accompanying drawings, the following describes a device control method according to an embodiment of the present application by using an example in which the device control method is applied to the inverter 211 of the primary sub-grid 21.

FIG. 2 is a schematic flowchart of a device control method according to the present application. As shown in FIG. 2, the method includes the following steps.

S201: The inverter obtains a current supply power of the composite grid for the load, a first load power of the load, and first information of each of a plurality of sub-grids in the composite grid.

The plurality of sub-grids include the plurality of secondary sub-grids and the primary sub-grid, the first information includes a state of the power storage device, a current SOC of the power storage device, and a generation power of the power generation device, and the state includes a charging state or an idle state.

It should be noted that the state of the power storage device may further include a discharging state.

The power storage device may be a battery, and the power generation device may be a photovoltaic panel. This is not specifically limited in the present application.

In a possible implementation, with reference to FIG. 1, the inverter of the primary sub-grid receives a message sent by an inverter of each secondary sub-grid, where the message includes first information of the secondary sub-grid, and the inverter of the primary sub-grid obtains, from the message, the first information of the secondary sub-grid.

The inverter of the primary sub-grid receives a message of the load, where the message includes a current supply power of the composite grid for the load and a first load power of the load, and the inverter of the primary sub-grid obtains, from the message, the current supply power of the composite grid for the load and the first load power of the load.

The inverter of the primary sub-grid detects a state of the power storage device in the primary sub-grid, a current SOC of the power storage device, and a generation power of the power generation device to obtain the state of the power storage device, the current SOC of the power storage device, and the generation power of the power generation device.

S202: The inverter controls a plurality of inverters based on the current supply power, the first load power, and a plurality of pieces of first information to make SOCs of a plurality of power storage devices the same.

In a possible implementation, when the current supply power is not lower than the first load power, a plurality of generation powers are the same, and a state of a power storage device in a first sub-grid is the charging state, the inverter sends a first instruction message to an inverter of each of the plurality of sub-grids to obtain an adjusted supply power.

The first sub-grid is any one of the plurality of sub-grids, the first instruction message is used to instruct to fully charge the power storage device in each sub-grid, and the adjusted supply power is not lower than the first load power.

As an example, the inverter of the primary sub-grid determines whether the current supply power is not lower than the first load power, to obtain a first determining result; the inverter of the primary sub-grid determines whether the plurality of generation powers are the same, to obtain a second determining result; and the inverter of the primary sub-grid determines whether the state of each power storage device is the charging state, to obtain a plurality of third determining results.

When the first determining result is yes, the second determining result is yes, and each of the third determining results is yes, the inverter of the primary sub-grid generates a first instruction message, and sends the first instruction message to the inverter of each of the plurality of sub-grids.

Correspondingly, the inverter of each sub-grid receives the first instruction message from the inverter of the primary sub-grid.

On the basis of this possible implementation, when the current supply power is not lower than the first load power, the plurality of generation powers are the same, and the state of the power storage device in each sub-grid is the charging state, the first instruction message is sent to the inverter of each sub-grid to obtain the adjusted supply power. Because the first instruction message instructs to fully charge the power storage device in each sub-grid, and the adjusted supply power is not lower than the first load power, the power storage device can be fully charged while ensuring that enough electric energy is supplied to the load, thereby improving consistency of the SOCs of the power storage devices in the composite grid, so as to improve an electric energy output capability of the composite grid.

In still another possible implementation, when the current supply power is lower than the first load power, a plurality of generation powers are different, current SOCs of a plurality of power storage devices are different, and a state of a power storage device in a first sub-grid is the idle state, the inverter sends a second instruction message to an inverter of a second sub-grid, sends a third instruction message to an inverter of a third sub-grid, and sends a fourth instruction message to an inverter of a fourth sub-grid to obtain an adjusted supply power.

The first sub-grid is any one of the plurality of sub-grids, the second sub-grid is a sub-grid, among the plurality of sub-grids, in which a corresponding generation power is greater than a first value, the third sub-grid is a sub-grid, among the plurality of sub-grids, in which a current SOC of the power storage device is less than a second value, the fourth sub-grid is a sub-grid, among the plurality of sub-grids, in which a corresponding generation power is greater than the first value and a current SOC of the power storage device is not less than the second value, the second instruction message is used to instruct to keep the corresponding generation power unchanged, and adjust an output power of the power storage device to a third value, the third instruction message is used to instruct to keep the corresponding generation power unchanged, and adjust an output power of the inverter to a fourth value, the fourth instruction message is used to instruct to keep the corresponding generation power unchanged, and adjust an output power of the inverter to a fifth value, the third value or the fourth value is less than the fifth value, and the adjusted supply power is not lower than the first load power.

It should be noted that specific values of the first value and the second value may be set independently. This is not specifically limited in the present application.

As an example, the inverter of the primary sub-grid determines whether the current supply power is lower than the first load power, to obtain a fourth determining result; the inverter of the primary sub-grid determines whether the plurality of generation powers are different, to obtain a fifth determining result; the inverter of the primary sub-grid determines whether the current SOCs of the plurality of power storage devices are different, to obtain a sixth determining result; and the inverter of the primary sub-grid determines whether the state of each power storage device is the idle state, to obtain a plurality of seventh determining results.

When the fourth determining result is yes, the fifth determining result is yes, the sixth determining result is yes, and each of the seventh determining results is yes, the inverter of the primary sub-grid determines a sub-grid, among the plurality of sub-grids, in which a corresponding generation power is greater than the first value as a second sub-grid, then determines a third value, generates a second instruction message, and sends the second instruction message to the second sub-grid; the inverter of the primary sub-grid determines a sub-grid, among the plurality of sub-grids, in which a current SOC of the power storage device is less than the second value as a third sub-grid, then determines a fourth value, generates a third instruction message, and sends the third instruction message to the third sub-grid; and the inverter of the primary sub-grid determines a sub-grid, among the plurality of sub-grids, in which a corresponding generation power is greater than the first value and a current SOC of the power storage device is not less than the second value as a fourth sub-grid, then determines a fifth value, generates a fourth instruction message, and sends the fourth instruction message to the fourth sub-grid.

Correspondingly, the inverter of the second sub-grid receives the second instruction message from the inverter of the primary sub-grid, keeps the corresponding generation power unchanged, and adjusts the output power of the power storage device to the third value; the inverter of the third sub-grid receives the third instruction message from the inverter of the primary sub-grid, keeps the corresponding generation power unchanged, and adjusts its own output power to the fourth value; and the inverter of the fourth sub-grid receives the fourth instruction message from the inverter of the primary sub-grid, keeps the corresponding generation power unchanged, and adjusts its own output power to the fifth value. Finally, the adjusted supply power is obtained.

It should be noted that for a specific solution in which the inverter of the primary sub-grid determines the third value, the fourth value, and the fifth value in this example, reference may be made to an existing solution. Details are not described herein again in the present application.

On the basis of this possible implementation, when the current supply power is lower than the first load power, the plurality of generation powers are different, the current SOCs of the plurality of power storage devices are different, and the state of the power storage device in the first sub-grid is the idle state, a generation power of the second sub-grid is greater than the first value, the current SOC of the third sub-grid is less than the second value, the corresponding generation power of the fourth sub-grid is greater than the first value, and the current SOCs of the power storage devices are not less than the second value. The second instruction message for instructing to keep the corresponding generation power unchanged and adjust the output power of the power storage device to the third value is sent to the inverter of the second sub-grid, the third instruction message for instructing to keep the corresponding generation power unchanged and adjust the output power of the inverter to the fourth value is sent to the inverter of the third sub-grid, and the fourth instruction message for instructing to keep the corresponding generation power unchanged and adjust the output power of the inverter to the fifth value is sent to the inverter of the fourth sub-grid. Because the third value or the fourth value is less than the fifth value, a sub-grid with higher power generation and a higher power level of the power storage device can output a higher power, and a sub-grid with a lower power level of the power storage device can output a lower power, so that consistency of the SOCs of the power storage devices in the composite grid can be improved while ensuring that enough electric energy is supplied to the load, so as to improve an electric energy output capability of the composite grid.

In still another possible implementation, when the current supply power is lower than the first load power, a plurality of generation powers are different, current SOCs of a plurality of power storage devices are the same, and a state of a power storage device in a first sub-grid is the idle state, the inverter sends a fifth instruction message to an inverter of each of the plurality of sub-grids to obtain an adjusted supply power.

The first sub-grid is any one of the plurality of sub-grids, the fifth instruction message is used to instruct to adjust an output power of the power storage device to a sixth value, and the adjusted supply power is not lower than the first load power.

As an example, the inverter of the primary sub-grid determines whether the current supply power is lower than the first load power, to obtain an eighth determining result; the inverter of the primary sub-grid determines whether the plurality of generation powers are different, to obtain a ninth determining result; the inverter of the primary sub-grid determines whether the current SOCs of the plurality of power storage devices are the same, to obtain a tenth determining result; and the inverter of the primary sub-grid determines whether the state of each power storage device is the idle state, to obtain a plurality of eleventh determining results.

When the eighth determining result is yes, the ninth determining result is yes, the tenth determining result is yes, and each of the eleventh determining results is yes, the inverter of the primary sub-grid determines a sixth value, generates a fifth instruction message, and sends the fifth instruction message to the inverter of each of the plurality of sub-grids.

Correspondingly, the inverter of each sub-grid receives the fifth instruction message from the inverter of the primary sub-grid, and adjusts the output power of the power storage device to the sixth value.

It should be noted that for a specific solution in which the inverter of the primary sub-grid determines the sixth value in this example, reference may be made to an existing solution. Details are not described herein again in the present application.

On the basis of this possible implementation, when the current supply power is lower than the first load power, the plurality of generation powers are different, the current SOCs of the plurality of power storage devices are the same, and the state of the power storage device in the first sub-grid is the idle state, the fifth instruction message for instructing to adjust the output power of the power storage device to the sixth value is sent to the inverter of each of the plurality of sub-grids. Because the output power of each power storage device is consistent, and the adjusted supply power is not lower than the first load power, consistency of the SOCs of the power storage devices in the composite grid can be improved while ensuring that enough electric energy is supplied to the load, so as to improve an electric energy output capability of the composite grid.

In still another possible implementation, when the current supply power is not lower than the first load power, a plurality of generation powers are different, and a state of a power storage device in a first sub-grid is the idle state, the inverter sends a sixth instruction message to an inverter of a fourth sub-grid, sends a seventh instruction message to an inverter of a fifth sub-grid, and sends an eighth instruction message to an inverter of a sixth sub-grid, with an adjusted supply power not lower than the first load power.

The first sub-grid is any one of the plurality of sub-grids, the fourth sub-grid is a sub-grid, among the plurality of sub-grids, in which a corresponding generation power is greater than the first value and a current SOC of the power storage device is not less than the second value, the fifth sub-grid is a sub-grid, among the plurality of sub-grids, in which a corresponding generation power is greater than the first value and a current SOC of the power storage device is less than the second value, and the sixth sub-grid is a sub-grid, among the plurality of sub-grids, in which a corresponding generation power is not greater than the first value and a current SOC of the power storage device is less than the second value, the sixth instruction message is used to instruct to keep the corresponding generation power unchanged, and adjust an output power of the inverter to a seventh value, the seventh instruction message is used to instruct to keep the corresponding generation power unchanged, and adjust an output power of the inverter to an eighth value, the eighth instruction message is used to instruct to keep the corresponding generation power unchanged, and adjust an output power of the inverter to a ninth value, the ninth value is less than the eighth value, the eighth value is less than the seventh value, and the adjusted supply power is not lower than the first load power.

As an example, the inverter of the primary sub-grid determines whether the current supply power is not lower than the first load power, to obtain a twelfth determining result; the inverter of the primary sub-grid determines whether the plurality of generation powers are different, to obtain a thirteenth determining result; and the inverter of the primary sub-grid determines whether the state of each power storage device is the idle state, to obtain a plurality of fourteenth determining results.

When the twelfth determining result is yes, the thirteenth determining result is yes, and each of the fourteenth determining results is yes, the inverter of the primary sub-grid determines a sub-grid, among the plurality of sub-grids, in which a corresponding generation power is greater than the first value and a current SOC of the power storage device is not less than the second value as a fourth sub-grid, then determines a seventh value, generates a sixth instruction message, and sends the sixth instruction message to the fourth sub-grid; the inverter of the primary sub-grid determines a sub-grid, among the plurality of sub-grids, in which a corresponding generation power is greater than the first value and a current SOC of the power storage device is less than the second value as a fifth sub-grid, then determines an eighth value, generates a seventh instruction message, and sends the seventh instruction message to the fifth sub-grid; and the inverter of the primary sub-grid determines a sub-grid, among the plurality of sub-grids, in which a corresponding generation power is not greater than the first value and a current SOC of the power storage device is less than the second value as a sixth sub-grid, then determines a ninth value, generates an eighth instruction message, and sends the eighth instruction message to the sixth sub-grid.

Correspondingly, the inverter of the fourth sub-grid receives the sixth instruction message from the inverter of the primary sub-grid, keeps the corresponding generation power unchanged, and adjusts its own output power to the seventh value; the inverter of the fifth sub-grid receives the seventh instruction message from the inverter of the primary sub-grid, keeps the corresponding generation power unchanged, and adjusts its own output power to the eighth value; and the inverter of the sixth sub-grid receives the eighth instruction message from the inverter of the primary sub-grid, keeps the corresponding generation power unchanged, and adjusts its own output power to the ninth value. Finally, the adjusted supply power is obtained.

It should be noted that for a specific solution in which the inverter of the primary sub-grid determines the seventh value, the eighth value, and the ninth value in this example, reference may be made to an existing solution. Details are not described herein again in the present application.

On the basis of this possible implementation, when the current supply power is not lower than the first load power, the plurality of generation powers are different, and the state of the power storage device in the first sub-grid is the idle state, the fourth sub-grid is a sub-grid, among the plurality of sub-grids, in which a corresponding generation power is greater than the first value and a current SOC of the power storage device is not less than the second value, the fifth sub-grid is a sub-grid, among the plurality of sub-grids, in which a corresponding generation power is greater than the first value and a current SOC of the power storage device is less than the second value, and the sixth sub-grid is a sub-grid, among the plurality of sub-grids, in which a corresponding generation power is not greater than the first value and a current SOC of the power storage device is less than the second value. An adjusted supply power is obtained by sending the sixth instruction message to the inverter of the fourth sub-grid, sending the seventh instruction message to the inverter of the fifth sub-grid, and sending the eighth instruction message to the inverter of the sixth sub-grid. Because the sixth instruction message is used to instruct to keep the corresponding generation power unchanged, and adjust an output power of the inverter to the seventh value, the seventh instruction message is used to instruct to keep the corresponding generation power unchanged, and adjust the output power of the inverter to the eighth value, the eighth instruction message is used to instruct to keep the corresponding generation power unchanged, and adjust the output power of the inverter to the ninth value, the ninth value is less than the eighth value, the eighth value is less than the seventh value, and the adjusted supply power is not lower than the first load power, a sub-grid with a higher generation power and a higher power level of a power storage device can output a higher power, and a sub-grid with a lower generation power or a lower power level of a power storage device can output a lower power, so that consistency of the SOCs of the power storage devices in the composite grid can be improved while ensuring that enough electric energy is supplied to the load, so as to improve an electric energy output capability of the composite grid.

In still another possible implementation, when the current supply power is not lower than the first load power and SOCs of a plurality of power storage devices are the same, the inverter obtains a ninth instruction message, and then sends a tenth instruction message to each of the plurality of sub-grids to obtain an adjusted supply power.

The ninth instruction message is used to instruct to adjust a power of the load from the first load power to a second load power, and the tenth instruction message is used to instruct to keep the corresponding generation power unchanged, and adjust an output power of the power storage device to a tenth value, and the adjusted supply power is not lower than the first load power.

It should be noted that for specific descriptions of this possible implementation, reference may be made to related descriptions in subsequent parts of specific implementations of the present application. Details are not described herein again in the present application.

On the basis of this solution, a current supply power of the composite grid for the load, a first load power of the load, and first information of each of a plurality of sub-grids in the composite grid are obtained. The plurality of sub-grids include the plurality of secondary sub-grids and the primary sub-grid, the first information includes a state of the power storage device, an SOC of the power storage device, and a generation power of the power generation device, and the state includes a charging state or an idle state. Then, a plurality of inverters can be controlled based on the current supply power, the first load power, and a plurality of pieces of first information to make SOCs of a plurality of power storage devices the same, thereby improving consistency of the SOCs of the power storage devices in the composite grid, so as to improve an electric energy output capability of the composite grid.

The foregoing generally describes the device control method provided in the present application. The following further describes the device control method provided in the present application with reference to the accompanying drawings.

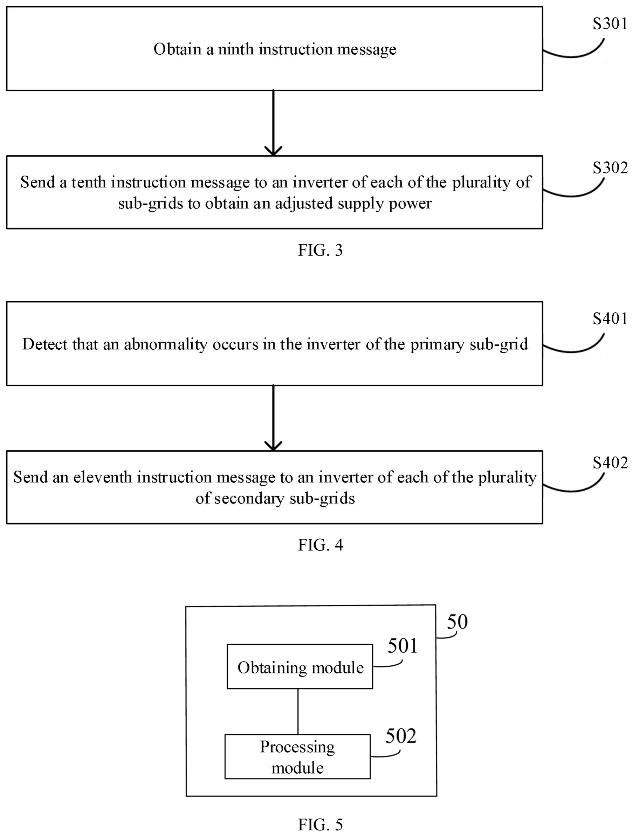

In a design, when the current supply power is not lower than the first load power and the SOCs of the plurality of power storage devices are the same, FIG. 3 is a schematic flowchart of another device control method according to the present application. As shown in FIG. 3, S202 provided in a specific implementation of the present application may specifically include a plurality of steps as follows.

S301: The inverter obtains a ninth instruction message.

The ninth instruction message is used to instruct to adjust a power of the load from the first load power to a second load power.

It should be noted that the first load power may be higher than the second load power, or the first load power may be lower than the second load power. This is not specifically limited in the present application.

In a possible implementation, with reference to FIG. 1, after the power of the load is adjusted from the first load power to the second load power, a load power detection apparatus generates a ninth instruction message, and sends the ninth instruction message to the inverter of the primary sub-grid, and the inverter of the primary sub-grid obtains the ninth instruction message.

S302: The inverter sends a tenth instruction message to an inverter of each of the plurality of sub-grids to obtain an adjusted supply power.

The tenth instruction message is used to instruct to keep the corresponding generation power unchanged, and adjust an output power of the power storage device to a tenth value, and the adjusted supply power is not lower than the first load power.

In a possible implementation, the inverter of the primary sub-grid determines the tenth value, generates the tenth instruction message, and sends the tenth instruction message to the inverter of each of the plurality of sub-grids.

Correspondingly, the inverter of each sub-grid receives the tenth instruction message from the inverter of the primary sub-grid, and adjusts the output power of the power storage device to the tenth value to obtain the adjusted supply power.

It should be noted that for a specific solution in which the inverter of the primary sub-grid determines the tenth value in this example, reference may be made to an existing solution. Details are not described herein again in the present application.

On the basis of this solution, when the current supply power is not lower than the first load power, and the SOCs of the plurality of power storage devices are the same, the ninth instruction message for instructing to adjust the power of the load from the first load power to the second load power is obtained, and the tenth instruction message is sent to the inverter of each of the plurality of sub-grids to obtain the adjusted supply power. Because the tenth instruction message is used to instruct to keep the corresponding generation power unchanged, and adjust the output power of the power storage device to the tenth value, and the adjusted supply power is not lower than the first load power, when the power of the load changes, consistency of the SOCs of the power storage devices in the composite grid can be improved while ensuring that enough electric energy is supplied to the load, so as to improve an electric energy output capability of the composite grid.

In a design, FIG. 4 is a schematic flowchart of another device control method according to the present application. As shown in FIG. 4, the device control method provided in the present application may further include a plurality of steps as follows.

S401: The inverter detects that an abnormality occurs in the inverter of the primary sub-grid.

In a possible implementation, after an abnormality occurs in the inverter of the primary sub-grid, the inverter of the primary sub-grid can detect its own abnormality.

S402: The inverter sends an eleventh instruction message to an inverter of each of the plurality of secondary sub-grids.

The eleventh instruction message is used to instruct the inverters of the plurality of secondary sub-grids to determine a new primary sub-grid based on a preset rule, and the new primary sub-grid is any one of the plurality of secondary sub-grids.

It should be noted that the preset rule may be determined randomly, or the preset rule may be determined based on serial number of the inverter. This is not specifically limited in the present application.

In a possible implementation, the inverter of the primary sub-grid generates the eleventh instruction message, and sends the eleventh instruction message to an inverter of each of the plurality of secondary sub-grids.

Correspondingly, the inverter of each secondary sub-grid receives the eleventh instruction message from the inverter of the primary sub-grid, and the inverters of the plurality of secondary sub-grids then determine a new primary sub-grid based on a preset rule. The inverter of the new primary sub-grid may execute the solution in S201 and S202 provided in the specific implementation of the present application.

On the basis of this solution, when it is detected that an abnormality occurs in the inverter of the primary sub-grid, the eleventh instruction message is sent to the inverter of each of the plurality of secondary sub-grids. Because the eleventh instruction message is used to instruct the inverters of the plurality of secondary sub-grids to determine a new primary sub-grid based on a preset rule, and the new primary sub-grid is any one of the plurality of secondary sub-grids, a new primary sub-grid can be determined when an abnormality occurs in the inverter of the current primary sub-grid, thereby improving robustness of the solution.

In this embodiment of the present application, the inverter may be divided into functional modules according to the foregoing method example.

In the case of division into functional modules, FIG. 5 shows a schematic diagram of a structure of an inverter. As shown in FIG. 5, the inverter 50 includes an obtaining module 501 and a processing module 502.

In some embodiments, the inverter 50 may further include a storage module (not shown in FIG. 5) configured to store program instructions and data.

The obtaining module 501 is configured to obtain a current supply power of a composite grid for a load, a first load power of the load, and first information of each of a plurality of sub-grids in the composite grid, where the plurality of sub-grids include a plurality of secondary sub-grids and a primary sub-grid, the first information includes a state of a power storage device, an SOC of the power storage device, and a generation power of a power generation device, and the state includes a charging state or an idle state; and the processing module 502 is configured to control a plurality of inverters based on the current supply power, the first load power, and a plurality of pieces of first information to make SOCs of a plurality of power storage devices the same.

Optionally, that the processing module 502 is configured to control a plurality of inverters based on the current supply power, the first load power, and a plurality of pieces of first information includes: when the current supply power is not lower than the first load power, a plurality of generation powers are the same, and a state of a power storage device in a first sub-grid is the charging state, send a first instruction message to an inverter of each of the plurality of sub-grids to obtain an adjusted supply power, where the first sub-grid is any one of the plurality of sub-grids, the first instruction message is used to instruct to fully charge the power storage device in each sub-grid, and the adjusted supply power is not lower than the first load power.

Optionally, that the processing module 502 is configured to control a plurality of inverters based on the current supply power, the first load power, and a plurality of pieces of first information includes: when the current supply power is lower than the first load power, a plurality of generation powers are different, current SOCs of a plurality of power storage devices are different, and a state of a power storage device in a first sub-grid is the idle state, send a second instruction message to an inverter of a second sub-grid, send a third instruction message to an inverter of a third sub-grid, and send a fourth instruction message to an inverter of a fourth sub-grid to obtain an adjusted supply power, where the first sub-grid is any one of the plurality of sub-grids, the second sub-grid is a sub-grid, among the plurality of sub-grids, in which a corresponding generation power is greater than a first value, the third sub-grid is a sub-grid, among the plurality of sub-grids, in which a current SOC of the power storage device is less than a second value, the fourth sub-grid is a sub-grid, among the plurality of sub-grids, in which a corresponding generation power is greater than the first value and a current SOC of the power storage device is not less than the second value, the second instruction message is used to instruct to keep the corresponding generation power unchanged, and adjust an output power of the power storage device to a third value, the third instruction message is used to instruct to keep the corresponding generation power unchanged, and adjust an output power of the inverter to a fourth value, the fourth instruction message is used to instruct to keep the corresponding generation power unchanged, and adjust an output power of the inverter to a fifth value, the third value or the fourth value is less than the fifth value, and the adjusted supply power is not lower than the first load power.

Optionally, that the processing module 502 is configured to control a plurality of inverters based on the current supply power, the first load power, and a plurality of pieces of first information includes: when the current supply power is lower than the first load power, a plurality of generation powers are different, current SOCs of a plurality of power storage devices are the same, and a state of a power storage device in a first sub-grid is the idle state, send a fifth instruction message to an inverter of each of the plurality of sub-grids to obtain an adjusted supply power, where the first sub-grid is any one of the plurality of sub-grids, the fifth instruction message is used to instruct to adjust an output power of the power storage device to a sixth value, and the adjusted supply power is not lower than the first load power.

Optionally, that the processing module 502 is configured to control a plurality of inverters based on the current supply power, the first load power, and a plurality of pieces of first information includes: when the current supply power is not lower than the first load power, a plurality of generation powers are different, and a state of a power storage device in a first sub-grid is the idle state, send a sixth instruction message to an inverter of a fourth sub-grid, send a seventh instruction message to an inverter of a fifth sub-grid, and send an eighth instruction message to an inverter of a sixth sub-grid, with an adjusted supply power not lower than the first load power, where the first sub-grid is any one of the plurality of sub-grids, the fourth sub-grid is a sub-grid, among the plurality of sub-grids, in which a corresponding generation power is greater than the first value and a current SOC of the power storage device is not less than the second value, the fifth sub-grid is a sub-grid, among the plurality of sub-grids, in which a corresponding generation power is greater than the first value and a current SOC of the power storage device is less than the second value, and the sixth sub-grid is a sub-grid, among the plurality of sub-grids, in which a corresponding generation power is not greater than the first value and a current SOC of the power storage device is less than the second value, the sixth instruction message is used to instruct to keep the corresponding generation power unchanged, and adjust an output power of the inverter to a seventh value, the seventh instruction message is used to instruct to keep the corresponding generation power unchanged, and adjust an output power of the inverter to an eighth value, the eighth instruction message is used to instruct to keep the corresponding generation power unchanged, and adjust an output power of the inverter to a ninth value, the ninth value is less than the eighth value, the eighth value is less than the seventh value, and the adjusted supply power is not lower than the first load power.

Optionally, that the processing module 502 is configured to control a plurality of inverters based on the current supply power, the first load power, and a plurality of pieces of first information includes: when the current supply power is not lower than the first load power and SOCs of a plurality of power storage devices are the same, obtain a ninth instruction message, where the ninth instruction message is used to instruct to adjust a power of the load from the first load power to a second load power; and send a tenth instruction message to an inverter of each of the plurality of sub-grids to obtain an adjusted supply power, where the tenth instruction message is used to instruct to keep the corresponding generation power unchanged, and adjust an output power of the power storage device to a tenth value, and the adjusted supply power is not lower than the first load power.

Optionally, the processing module 502 is further configured to: detect that an abnormality occurs in the inverter of the primary sub-grid; and send an eleventh instruction message to an inverter of each of the plurality of secondary sub-grids, where the eleventh instruction message is used to instruct the inverters of the plurality of secondary sub-grids to determine a new primary sub-grid based on a preset rule, and the new primary sub-grid is any one of the plurality of secondary sub-grids.

All related content of each step in the foregoing method embodiment may be cited to a function description of a corresponding functional module, and details are not described herein again.

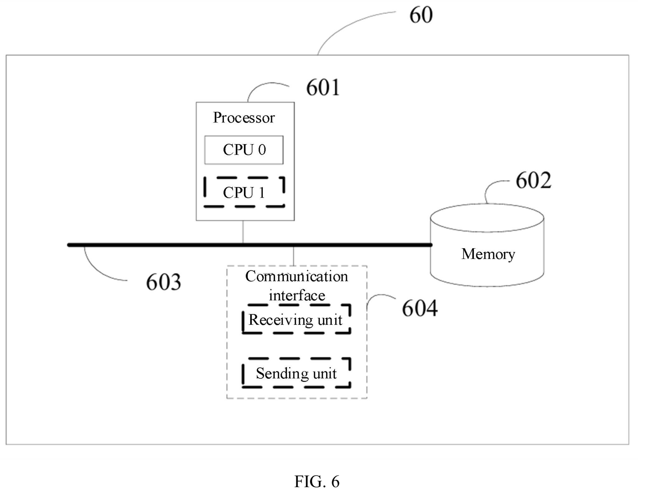

When functions of the foregoing functional modules are implemented in the form of hardware, FIG. 6 shows a schematic diagram of a structure of another inverter. As shown in FIG. 6, the inverter 60 includes a processor 601, a memory 602, and a bus 603.The processor 601 may be connected to the memory 602 by using the bus 603.

In one embodiment, the processor 601 may include one or more CPUs, such as a CPU 0 and a CPU 1 shown in FIG. 6.

In a possible implementation, the memory 602 may exist independently of the processor 601, and the memory 602 may be connected to the processor 601 by using the bus 603, to store instructions or program code. When the processor 601 invokes and executes the instructions or the program code stored in the memory 602, the device control method provided in this embodiment of the present application can be implemented.

In another possible implementation, the memory 602 may alternatively be integrated with the processor 601.

It should be noted that the structure shown in FIG. 6 does not constitute a limitation on the inverter 60. In addition to components shown in FIG. 6, the inverter 60 may include more or fewer components than those illustrated, or combine some components, or have different component arrangements.

As an example, with reference to FIG. 5, functions implemented by the obtaining module 501 and the processing module 502 in the inverter 50 are the same as those implemented by the processor 601 in FIG. 6.

Optionally, as shown in FIG. 6, the inverter 60 provided in this embodiment of the present application may further include a communication interface 604.

In a possible implementation, in the inverter 60 provided in this embodiment of the present application, the communication interface 604 may be further integrated into the processor 601. This is not specifically limited in this embodiment of the present application.

An embodiment of the present application further provides a computer-readable storage medium having a computer program or instructions stored thereon, where the computer program or the instructions, when executed, enable a computer to perform the steps in the method procedure shown in the foregoing method embodiment.

An embodiment of the present application provides a computer program product including instructions. When the computer program product runs on a computer, the computer is enabled to perform the steps in the method procedure shown in the foregoing method embodiment.

An embodiment of the present application provides a chip system, including a processor and an interface circuit, where the interface circuit is configured to receive a computer program or instructions, and transmit the computer program or the instructions to the processor; and the processor is configured to execute the computer program or the instructions, to enable the chip system to perform the steps in the method procedure shown in the foregoing method embodiment.

The inverter, the computer-readable storage medium, and the computer program product provided in this embodiment may be applied to the foregoing device control method provided in this embodiment. Therefore, for technical effects that can be achieved, reference may also be made to the foregoing method embodiment. Details are not described herein again in this embodiment of the present application.

## Claims

1. A device control method, **characterized in that** the method is applied to an inverter of a primary sub-grid in a composite grid, the composite grid further comprises a plurality of secondary sub-grids, each sub-grid further comprises a power storage device and a power generation device, the composite grid is configured to supply power to a load, and the method comprises:
obtaining a current supply power of the composite grid for the load, a first load power of the load, and first information of each of a plurality of sub-grids in the composite grid, wherein the plurality of sub-grids comprise the plurality of secondary sub-grids and the primary sub-grid, the first information comprises a state of the power storage device, a current state of charge (SOC) of the power storage device, and a generation power of the power generation device, and the state comprises a charging state or an idle state; and
controlling a plurality of inverters based on the current supply power, the first load power, and a plurality of pieces of first information to make SOCs of a plurality of power storage devices the same.

2. The method according to claim 1, **characterized in that** the controlling a plurality of inverters based on the current supply power, the first load power, and a plurality of pieces of first information comprises:
when the current supply power is not lower than the first load power, a plurality of generation powers are the same, and a state of a power storage device in a first sub-grid is the charging state, sending a first instruction message to an inverter of each of the plurality of sub-grids to obtain an adjusted supply power, wherein the first sub-grid is any one of the plurality of sub-grids, the first instruction message is used to instruct to fully charge the power storage device in each sub-grid, and the adjusted supply power is not lower than the first load power.

3. The method according to claim 1, **characterized in that** the controlling a plurality of inverters based on the current supply power, the first load power, and a plurality of pieces of first information comprises:
when the current supply power is lower than the first load power, a plurality of generation powers are different, current SOCs of a plurality of power storage devices are different, and a state of a power storage device in a first sub-grid is the idle state, sending a second instruction message to an inverter of a second sub-grid, sending a third instruction message to an inverter of a third sub-grid, and sending a fourth instruction message to an inverter of a fourth sub-grid to obtain an adjusted supply power, wherein the first sub-grid is any one of the plurality of sub-grids, the second sub-grid is a sub-grid, among the plurality of sub-grids, in which a corresponding generation power is greater than a first value, the third sub-grid is a sub-grid, among the plurality of sub-grids, in which a current SOC of the power storage device is less than a second value, the fourth sub-grid is a sub-grid, among the plurality of sub-grids, in which a corresponding generation power is greater than the first value and a current SOC of the power storage device is not less than the second value, the second instruction message is used to instruct to keep the corresponding generation power unchanged, and adjust an output power of the power storage device to a third value, the third instruction message is used to instruct to keep the corresponding generation power unchanged, and adjust an output power of the inverter to a fourth value, the fourth instruction message is used to instruct to keep the corresponding generation power unchanged, and adjust an output power of the inverter to a fifth value, the third value or the fourth value is less than the fifth value, and the adjusted supply power is not lower than the first load power.

4. The method according to claim 1, **characterized in that** the controlling a plurality of inverters based on the current supply power, the first load power, and a plurality of pieces of first information comprises:
when the current supply power is lower than the first load power, a plurality of generation powers are different, current SOCs of a plurality of power storage devices are the same, and a state of a power storage device in a first sub-grid is the idle state, sending a fifth instruction message to an inverter of each of the plurality of sub-grids to obtain an adjusted supply power, wherein the first sub-grid is any one of the plurality of sub-grids, the fifth instruction message is used to instruct to adjust an output power of the power storage device to a sixth value, and the adjusted supply power is not lower than the first load power.

5. The method according to claim 1, **characterized in that** the controlling a plurality of inverters based on the current supply power, the first load power, and a plurality of pieces of first information comprises:
when the current supply power is not lower than the first load power, a plurality of generation powers are different, and a state of a power storage device in a first sub-grid is the idle state, sending a sixth instruction message to an inverter of a fourth sub-grid, sending a seventh instruction message to an inverter of a fifth sub-grid, and sending an eighth instruction message to an inverter of a sixth sub-grid, with an adjusted supply power not lower than the first load power, wherein the first sub-grid is any one of the plurality of sub-grids, the fourth sub-grid is a sub-grid, among the plurality of sub-grids, in which a corresponding generation power is greater than the first value and a current SOC of the power storage device is not less than the second value, the fifth sub-grid is a sub-grid, among the plurality of sub-grids, in which a corresponding generation power is greater than the first value and a current SOC of the power storage device is less than the second value, the sixth sub-grid is a sub-grid, among the plurality of sub-grids, in which a corresponding generation power is not greater than the first value and a current SOC of the power storage device is less than the second value, the sixth instruction message is used to instruct to keep the corresponding generation power unchanged, and adjust an output power of the inverter to a seventh value, the seventh instruction message is used to instruct to keep the corresponding generation power unchanged, and adjust an output power of the inverter to an eighth value, the eighth instruction message is used to instruct to keep the corresponding generation power unchanged, and adjust an output power of the inverter to a ninth value, the ninth value is less than the eighth value, the eighth value is less than the seventh value, and the adjusted supply power is not lower than the first load power.

6. The method according to claim 1, **characterized in that** the controlling a plurality of inverters based on the current supply power, the first load power, and a plurality of pieces of first information comprises:
when the current supply power is not lower than the first load power and SOCs of a plurality of power storage devices are the same, obtaining a ninth instruction message, wherein the ninth instruction message is used to instruct to adjust a power of the load from the first load power to a second load power; and
sending a tenth instruction message to an inverter of each of the plurality of sub-grids to obtain an adjusted supply power, wherein the tenth instruction message is used to instruct to keep the corresponding generation power unchanged, and adjust an output power of the power storage device to a tenth value, and the adjusted supply power is not lower than the first load power.

7. The method according to any one of claims 1 to 6, **characterized in that** the method further comprises:
detecting that an abnormality occurs in the inverter of the primary sub-grid; and
sending an eleventh instruction message to an inverter of each of the plurality of secondary sub-grids, wherein the eleventh instruction message is used to instruct the inverters of the plurality of secondary sub-grids to determine a new primary sub-grid based on a preset rule, and the new primary sub-grid is any one of the plurality of secondary sub-grids.

8. An inverter, **characterized in that** the inverter is comprised in a primary sub-grid in a composite grid, the composite grid further comprises a plurality of secondary sub-grids, each sub-grid further comprises a power storage device and a power generation device, the composite grid is configured to supply power to a load, and the inverter comprises an obtaining module and a processing module, wherein
the obtaining module is configured to obtain a current supply power of the composite grid for the load, a first load power of the load, and first information of each of a plurality of sub-grids in the composite grid, wherein the plurality of sub-grids comprise the plurality of secondary sub-grids and the primary sub-grid, the first information comprises a state of the power storage device, a current state of charge (SOC) of the power storage device, and a generation power of the power generation device, and the state comprises a charging state or an idle state; and
the processing module is configured to control a plurality of inverters based on the current supply power, the first load power, and a plurality of pieces of first information to make SOCs of a plurality of power storage devices the same.

9. An inverter, **characterized by** comprising a processor coupled to a memory, wherein the memory is configured to store a program or instructions that, when executed by the processor, enable the inverter to perform the method according to any one of claims 1 to 7.

10. A computer-readable storage medium, having a computer program or instructions stored thereon, **characterized in that** the computer program or the instructions, when executed, enable a computer to perform the method according to any one of claims 1 to 7.
